**Europäisches Patentamt**

**European Patent Office**

**Office européen des brevets**

(19)

(11) Veröffentlichungsnummer: **0 135 827**
**B1**

(12)

# EUROPÄISCHE PATENTSCHRIFT

(45) Veröffentlichungstag der Patentschrift:
**22.04.87**

(21) Anmeldenummer: **84110199.1**

(22) Anmeldetag: **28.08.84**

(51) Int. Cl.⁴: **F 16 D 35/00**

(54) Verfahren zur Steuerung der Abtriebsdrehzahl einer Flüssigkeitsreibungskupplung und Vorrichtung zur Durchführung des Verfahrens.

(30) Priorität: **15.09.83 DE 3333268**

(43) Veröffentlichungstag der Anmeldung:
**03.04.85 Patentblatt 85/14**

(45) Bekanntmachung des Hinweises auf die Patenterteilung:
**22.04.87 Patentblatt 87/17**

(84) Benannte Vertragsstaaten:
**DE FR GB IT NL SE**

(56) Entgegenhaltungen:
**EP - A - 0 009 415**
**DE - B - 2 728 901**
**DE - B - 2 804 557**
**DE - B - 2 804 859**
**DE - C - 3 029 992**
**GB - A - 2 071 822**

(73) Patentinhaber: **Süddeutsche Kühlerfabrik Julius Fr. Behr GmbH & Co. KG., Mauserstrasse 3,
D-7000 Stuttgart 30 (DE)**

(72) Erfinder: **Weible, Reinhold, Dipl.-Ing. (FH),
Helmuifstrasse 8, D-7000 Stuttgart 40 (DE)**
Erfinder: **Lochmahr, Karl, Dipl.-Ing. (FH), Keltergasse 11,
D-7143 Vaihingen/Enz (DE)**

(74) Vertreter: **Heumann, Christian, Süddeutsche Kühlerfabrik Julius Fr. Behr GmbH & Co. KG
Patentabteilung Mauserstrasse 3 Postfach 30 09 20,
D-7000 Stuttgart 30 (DE)**

## Beschreibung

Die Erfindung betrifft ein Verfahren zur Steuerung der Abtriebsdrehzahl einer Flüssigkeitsreibungskupplung mit Füllungsregelung, wobei der Füllungsgrad im Arbeitsraum über ein zwischen Arbeitsraum und Vorratsraum angeordnetes Ventil geregelt wird. Darüber hinaus betrifft die Erfindung eine Vorrichtung zur Durchführung dieses Verfahrens, d.h. eine Flüssigkeitsreibungskupplung mit einem Arbeitsraum und einem Vorratsraum, die durch eine Zwischenwand getrennt sind, in der ein Ventil zur Regelung des Füllungsgrades angeordnet ist, das über einen Ventilhebel betätigt wird.

Derartige Flüssigkeitsreibungskupplungen sind zum Beispiel durch die DE-A-2804557 oder die DE-A-2804859 der Anmelderin bekannt.

Bei der Flüssigkeitsreibungskupplung nach der DE-A-2804859 wird der Ventilhebel der Flüssigkeitsreibungskupplung über einen Elektromagneten betätigt, der in Abhängigkeit von der Kühlmitteltemperatur angesteuert wird. Diese sogenannte Zweipunktregelung (Auf/Zu-Schaltung) arbeitet relativ grob und erlaubt es nicht ohne weiteres, stabile Zwischendrehzahlen zwischen Minimal- und Maximal-Abtriebsdrehzahl einzuhalten.

Bei der Flüssigkeitsreibungskupplung nach der DE-A-2804557 wird der Ventilhebel über ein beheiztes Dehnstoffelement betätigt, das ebenfalls in Abhängigkeit von der Kühlmitteltemperatur angesteuert wird. Der Antrieb mittels eines Dehnstoffelementes hat im Hinblick auf die Regelung der Abtriebsdrehzahl einer Flüssigkeitsreibungskupplung den Nachteil, dass die Abkühlung des Dehnstoffelementes von verschiedenen Umgebungsbedingungen abhängt und daher relativ unkontrolliert abläuft – der Regelvorgang verläuft daher relativ träge, was ein zu spätes Zuschalten der Kupplung zur Folge haben kann.

Durch die EP-A-9415 wurde eine Flüssigkeitsreibungskupplung bekannt, bei der der Ventilhebel elektromagnetisch über die Antriebswelle betätigt und ständig zwischen einer Offen- und einer Schliessstellung zyklisch verstellt wird. Nachteilig bei diesem sogenannten Taktverfahren ist, dass infolge der schnellen Ventilbetätigung grosse Ansteuerleistungen erforderlich sind.

Wegen der hohen Anzahl von Schaltzyklen ergibt sich als weiterer Nachteil, dass die zyklisch verstellten Teile des Ventilmechanismus einem erhöhten mechanischen Verschleiss unterliegen, der sich negativ auf die Lebensdauer dieser Bauteile und damit der Kupplung auswirkt.

Schliesslich wurde durch die DE-A-2728901 ein Verfahren zur Drehzahlbegrenzung eines durch eine Kupplung angetriebenen Lüfters bekannt, wobei die Kupplung als hydrodynamische Kupplung mit Füllungsgradregelung ausgebildet ist. Die Regelung erfolgt über einen Kupplungsregler, der einen zusätzlichen von einer Pumpe betriebenen Fluid-Kreislauf steuert, wobei die Steuerung im Kupplungsregler über ein elektromagnetisch betätigtes Ventil erfolgt. Derartige Kupplungen bzw. Kupplungsregler sind in technischer und wirtschaftlicher Hinsicht aufwendig.

Es ist Aufgabe der Erfindung, ein Verfahren zur Steuerung der Abtriebsdrehzahl einer Flüssigkeitsreibungskupplung der eingangs genannten Art zu schaffen, das möglichst betriebssicher und relativ trägheitslos arbeitet und das eine definierte Abhängigkeit der Abtriebsdrehzahl von einer Regelgrösse erlaubt, insbesondere eine definierte Abhängigkeit der Lüfterdrehzahl von der Kühlmitteltemperatur einer Brennkraftmaschine im Kraftfahrzeug. Darüber hinaus ist es Aufgabe der Erfindung, eine Vorrichtung zur Durchführung des Verfahrens zu schaffen, die einfach im Aufbau, zuverlässig im Betrieb und kostengünstig in der Herstellung ist und günstige Einbaubedingungen für eine Flüssigkeitsreibungskupplung, insbesondere für Kraftfahrzeuge, bietet.

Diese Aufgabe wird durch die Erfindung dadurch gelöst, dass das Ventil der Flüssigkeitsreibungskupplung über einen Schrittmotor-Stellantrieb in Abhängigkeit von mindestens einer Regelgrösse angesteuert wird. Hierdurch ist es möglich, mittels eines robusten, digital angesteuerten Stellantriebes eine quasi stetige (Analog-) Regelung der Abtriebsdrehzahl zu erreichen und die Teile des Ventilmechanismus der Kupplung vor übermässigem Verschleiss zu schützen.

Nach einer Weiterbildung der Erfindung gemäss Anspruch 2 wird die Regelgrösse dem Schrittmotor-Stellantrieb über einen Regler, d.h. eine integrierte Steuerschaltung oder auch einen Mikrocomputer, zugeführt. Hierdurch wird eine definierte Abhängigkeit zwischen dem Hub des Stellmotors und der Regelgrösse geschaffen, d.h. es wird möglich, die Kühl- bzw. Lüfterleistung dem momentanen Kühlbedarf der Brennkraftmaschine anzupassen. In einer Weiterbildung der Erfindung wird als Hilfsregelgrösse die Abtriebsdrehzahl der Flüssigkeitsreibungskupplung herangezogen – dadurch kann in bestimmten Betriebszuständen die Lüfterdrehzahl auf einen maximalen Wert begrenzt werden, wodurch unter anderem das Lüftergeräusch gemindert wird.

Nach einer Weiterbildung der Erfindung gemäss Anspruch 5 kann die Abtriebsdrehzahl über eine sogenannte Hall-Sonde erfasst werden, die eine Umsetzung der Drehzahl in Spannungsimpulse erlaubt.

In vorteilhafter Weiterbildung der Erfindung gemäss Anspruch 6 erzeugt der Schrittmotor-Stellantrieb, der selbst eine schrittweise rotierende Motorwelle aufweist, eine Linearbewegung, die auf den Ventilhebel übertragen wird. Damit ergeben sich für diesen Schrittmotor günstige Einbaubedingungen für eine bereits bekannte Flüssigkeitsreibungskupplung mit Ventilsteuerung. Der Ventilhebel kann dabei – je nach Auslegung des Schrittmotors – beliebig viele Zwischenstellungen zwischen «voll geschlossen» und «voll geöffnet» einnehmen – wie in einer Analog-Steuerung. Damit kann der Durchsatz von viskosem Fluid beliebig gesteuert werden, wodurch auch entsprechende Zwischendrehzahlen stabil gehalten werden können.

In vorteilhafter Weiterbildung der Erfindung gemäss den Ansprüchen 7 bis 10 wird mit diesem Verfahren die Kühlmitteltemperatur des Kühlkreislaufes einer Brennkraftmaschine im Kraftfahrzeug geregelt. Hierbei können dem Regler neben der Kühlmitteltemperatur als Regelgrösse und der Lüfterdrehzahl als Hilfsregelgrösse auch weitere Störgrössen aufgeschaltet und entsprechend ihrem Einfluss bewertet werden. Das erfindungsgemässe Verfahren zur Steuerung der Abtriebsdrehzahl einer Flüssigkeitsreibungskupplung eignet sich somit besonders für die Anwendung in Kraftfahrzeugen, in denen mittels eines Lüfters der Wärmeaustausch zwischen Kühlluft und Kühlmittel im Kühler geregelt wird.

In vorteilhafter Weiterbildung der Erfindung gemäss den Ansprüchen 11 bis 16 ergibt sich eine Vorrichtung zur Durchführung des erfindungsgemässen Verfahrens: Danach ist der Schrittmotor-Stellantrieb koaxial im Deckel der Flüssigkeitsreibungskupplung angeordnet und betätigt den Ventilhebel der Kupplung. Der Schrittmotor-Stellantrieb ist dabei drehbar in der Kupplung, aber andererseits ortsfest (zum Beispiel im Kraftfahrzeug) gelagert, so dass ein fester Kabelanschluss möglich ist. Vorteilhaft bei diesem Antrieb ist auch, dass der an sich schrittweise rotierende Motor hier eine Linearbewegung (mittels eines Mutter/Spindelantriebes) erzeugt, wodurch eine einfache Übertragung der Bewegung auf den Ventilhebel der Kupplung möglich wird. Darüber hinaus ergibt sich durch die Übersetzung des Gewindeantriebes eine genaue Einstellung des Ventilhebels mit vielen Zwischenstellungen. Durch die ortsfeste Lagerung des Stellantriebes kann der Drehzahlmesser, eine sogenannte Hall-Sonde, auf einfache Weise baulich mit dem Stellantrieb und der Kupplung integriert werden. Es ist weiterhin vorteilhaft, wenn die Kupplung mit einer im Vorratsraum umlaufenden Zusatzscheibe ausgestattet ist: Dadurch wird der Ölzulauf zur Ventilbohrung (in an sich bekannter Weise nach der DE-C-3029992) verbessert und die Zwischendrehzahlen stabilisiert. Schliesslich ist es von Vorteil, dass der Ventilhebel durch eine Öffnungsfeder belastet ist, so dass im Falle des Ausfalles der Hilfsenergie für den Schrittmotor-Stellantrieb der Ventilhebel in seine Endstellung «voll geöffnet» ausgelenkt wird und die Kupplung somit voll zugeschaltet ist. Im Kraftfahrzeug wird bei Eintritt eines solchen Falles eine Überhitzung des Motors vermieden.

Ein Ausführungsbeispiel der Erfindung ist in der Zeichnung dargestellt und wird im folgenden näher beschrieben. Es zeigen:

Fig. 1 einen Schnitt durch die Flüssigkeitsreibungskupplung mit Schrittmotor-Stellantrieb, und

Fig. 2 ein Blockschaltbild des Regelkreises mit der durch den Schrittmotor gesteuerten Flüssigkeitsreibungskupplung für den Kühlmittelkreislauf einer Brennkraftmaschine.

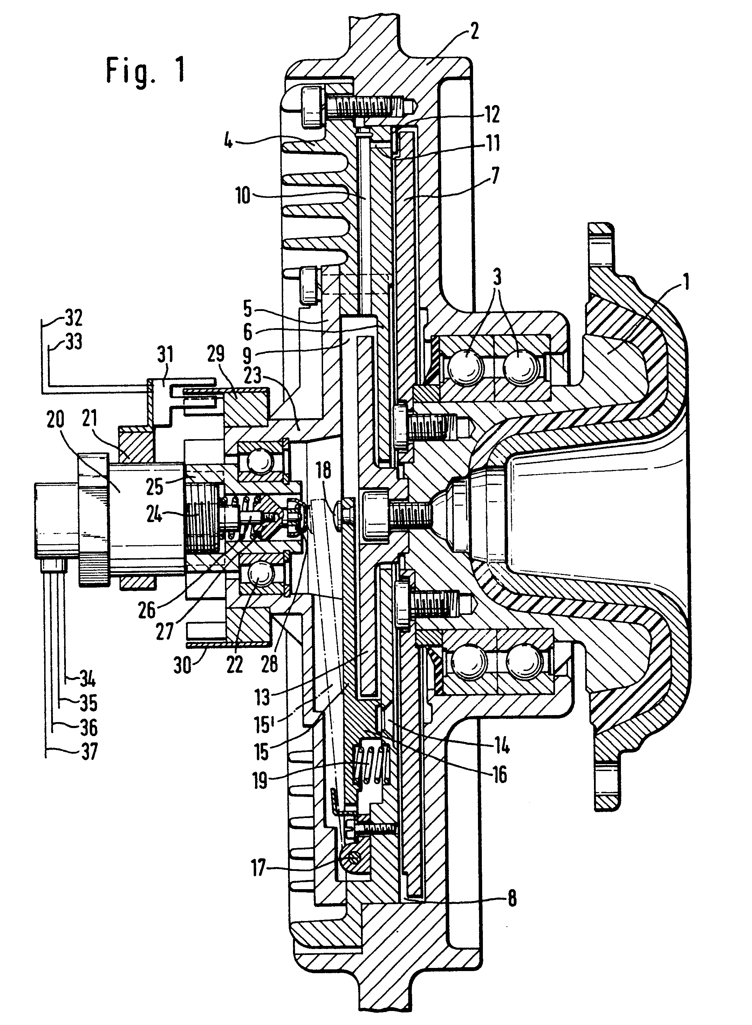

Fig. 1 zeigt eine an sich bekannte Flüssigkeitsreibungskupplung, die vom Verbrennungsmotor eines Kraftfahrzeuges angetrieben wird und selbst einen Lüfter trägt, der einen Kühlluftstrom durch den Kühler des Verbrennungsmotors fördert. Auf der Antriebswelle 1 dieser Flüssigkeitsreibungskupplung ist über das Doppellager 3 das Kupplungsgehäuse 2 drehbar gelagert, das an seiner Frontseite durch einen Gehäusedeckel 4 und ein Lagerschild 5 verschlossen wird. Die Kupplung ist durch eine Zwischenwand 6, die hier Bestandteil des Deckels 4 ist, geteilt in einen Arbeitsraum 8 und einen Vorratsraum 9, wobei im Arbeitsraum 8 die mit der Antriebswelle 1 verbundene Primärscheibe 7 und im Vorratsraum 9 die ebenfalls mit der Antriebswelle 1 verbundene Zusatzscheibe 13 umläuft – eine derartige Kupplung ist aus der DE-PS-3029992 der Anmelderin bekannt. Im Arbeitsraum 8 befindet sich ein viskoses Fluid, das bei einer Differenzdrehzahl zwischen Primärscheibe 7 und Kupplungsgehäuse 2 über den Staukörper 12, die axiale Rücklaufbohrung 11 und die radiale Rücklaufbohrung 10 in den Vorratsraum 9 zurückgefördert wird. Von dort gelangt das viskose Fluid je nach Stellung des Ventilhebels 15 über die in der Zwischenwand 6 angeordnete Ventilbohrung 14 wieder in den Arbeitsraum 8, dessen Füllungsgrad auf diese Weise geregelt wird – der Füllungsgrad bestimmt das übertragbare Drehmoment. Der Ventilhebel 15 ist über einen Zapfen 17 am Gehäusedeckel 4 gelagert und weist an seinem anderen Ende einen Kontaktniet 18 auf, der ungefähr im Bereich der Rotationsachse der Kupplung angeordnet ist. Der Ventilhebel 15 weist ferner in dem der Ventilöffnung 14 benachbarten Bereich ein Ventilschliessglied 16 auf, das die Ventilöffnung 14 verschliesst oder kontinuierlich bis zu einem maximalen Hub freigibt, wobei das Öffnen infolge der Federkraft der Öffnungsfeder 19 erfolgt. Die in der Zeichnung in den ausgezogenen Linien dargestellte Position des Ventilhebels 15 zeigt die Schliessstellung, in der kein viskoses Fluid durch die Ventilöffnung 14 treten kann; die strich-punktierte Darstellung des Ventilhebels 15' zeigt die maximale Öffnungsstellung, in der der maximale Durchflussquerschnitt freigegeben ist.

Auf der Frontseite der Kupplung ist in den Gehäusedeckel 4 ein Lagerschild 5 eingesetzt, das über einen Hals 23, ein Rillenkugellager 22 und eine Lagerhülse 25 den Schrittmotor-Stellantrieb 20 aufnimmt. Letzterer ist also gegenüber dem Kupplungsgehäuse 2 drehbar gelagert, während er über den ortsfesten Lagerring 21 raumfest angeordnet ist. Die Befestigung zwischen Lagerhülse 25 und Schrittmotor-Stellantrieb 20 erfolgt über ein Gewinde 24 in beiden Teilen. Der Schrittmotor-Stellantrieb 20 ist ein bekanntes, handelsübliches elektromechanisches Bauteil, wie es beispielsweise bei der Firma Philips GmbH Hamburg (Unternehmungsbereich Valvo) oder bei der Firma Delco, erhältlich ist. Der Schrittmotor-Stellantrieb 20 weist in seinem Inneren (das hier nicht dargestellt ist) eine schrittweise rotierende Motorwelle auf, die eine Spindelmutter antreibt, welche ihrerseits der (in der Zeichnung dargestellten) Spindel 26 eine schrittweise Linearbewegung erteilt. Zur Führung und Abstützung ist auf dem äusseren Ende der Spindel 26 ein Kopfstück 27 angeordnet, das in der Lagerhülse 25 gleitet und das an seinem äusseren Ende einen Drehteller 28 trägt, der seinerseits in Kontakt mit dem Kontaktniet 18 des Ventilhebels 15 steht.

Zur Aufnahme der Abtriebsdrehzahl der Kupplung, also der Lüfterdrehzahl, ist auf dem Hals 23 ein Ring 29 befestigt, der eine kronenförmige Weicheisenblende trägt. Am ortsfesten Lager 21 ist eine sogenannte Hall-Sonde 31 befestigt, die in Wirkverbindung mit der rotierenden, kronenförmigen Blende steht und somit die Abtriebsdrehzahl erfasst und als Signalspannung über die Anschlussdrähte 32, 33 meldet.

Der Schrittmotor-Stellantrieb 20 weist in seinem Inneren zwei Magnetwicklungen auf, die über die Anschlusskabel 34, 35, 36 und 37 mit Strom versorgt bzw. angesteuert werden. Somit erhält der Schrittmotor von einer geeigneten Steuerschaltung Steuerimpulse, die in eine schrittweise Linearbewegung umgesetzt und für die Positionierung des Ventilhebels verwertet werden.

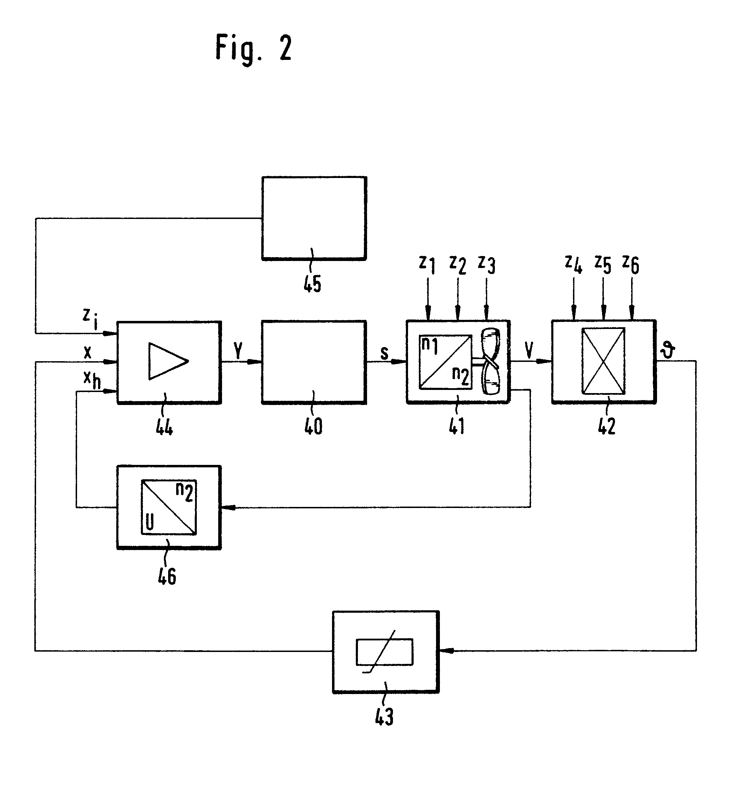

Fig. 2 zeigt ein Blockschaltbild für den Regelkreis, in den die zuvor beschriebene Flüssigkeitsreibungskupplung zum Antrieb eines Lüfters eingebaut ist. Die einzelnen Komponenten dieses Regelkreises sind zunächst der Schrittmotor-Stellantrieb 40, der einen Weg s produziert und diesen Weg auf die Kupplungslüftereinheit 41 überträgt, wobei die Kupplung von dem Verbrennungsmotor eines Kraftfahrzeuges mit der Drehzahl $n_1$ angetrieben wird und ihrerseits eine Abtriebsdrehzahl $n_2$ produziert, die gleich der Lüfterdrehzahl ist. Der Lüfter erzeugt einen Kühlluftstrom mit dem Durchsatz $\dot{V}$, der den Kühler 42 beaufschlagt, der vom Kühlmittel des Verbrennungsmotors durchströmt wird. Im Kühler 42 gibt das Kühlmittel also seine Wärme an den Luftstrom $\dot{V}$ ab und verlässt den Kühler 42 mit einer Temperatur $\vartheta$, die im Kühlmitteltemperaturfühler 43 gemessen und als Regelgrösse x dem Regler 44 zugeführt wird. Der Regler 44, eine integrierte Steuerschaltung oder ein Mikrocomputer, produziert ein Ausgangssignal Y in Form von Steuerimpulsen, die dem Schrittmotor zugeführt werden und somit dessen Bewegung steuern. Zur Verbesserung der Regelung wird die Lüfterdrehzahl $n_2$ von einem Drehzahlmesser 46 (Hall-Sonde) gemessen und als Hilfsregelgrösse $x_h$ ebenfalls dem Regler 44 zugeführt. Der Regelkreis, wie er sich in Wirklichkeit, d.h. im fahrenden Kraftfahrzeug darstellt, wird durch verschiedene Störgrössen $z_i$ beeinflusst. So wird die Lüfterkupplungseinheit 41 durch die Störgrössen $z_1$, $z_2$ und $z_3$ beeinflusst, die sich beispielsweise aus der Antriebsdrehzahl $n_1$ der Kupplung, aus der Umgebungstemperatur der Kupplung und aus dem Staudruck des fahrenden Kraftfahrzeuges ergeben können. Für den Kühler 42 sind die Störgrössen $z_4$, $z_5$ und $z_6$ angegeben, die beispielsweise durch die Kühllufttemperatur, die Kühlmitteltemperatur im Kühlervorlauf und die Durchflussmenge des Kühlmittels durch den Kühler verursacht werden können. Diese Störgrössen $z_i$ werden messtechnisch erfasst und einer Schaltungseinheit 45 zugeleitet, die ihrerseits auch Teil des Reglers 44 sein kann. In der Schaltungseinheit 45 werden die Störgrössen $z_i$ entsprechend ihrem bekannten Einfluss auf die Regelgrösse statisch und gegebenenfalls auch dynamisch bewertet und dem Regler 44 aufgeschaltet.

In dem zuvor beschriebenen Ausführungsbeispiel wurde als Regelgrösse x die Kühlmitteltemperatur im Kühlerrücklauf herangezogen, zumal in Kraftfahrzeugen üblicherweise im Kühlerrücklauf ein Temperaturfühler angeordnet ist, der für diesen Zweck verwendet werden kann. Es ist jedoch auch möglich, die Temperatur des Kühlmittels im Kühlervorlauf zu messen oder auch die Temperatur des Motoröles als Regelgrösse zu verwenden.

**Patentansprüche**

1. Verfahren zur Steuerung der Abtriebsdrehzahl einer Flüssigkeitsreibungskupplung mit Füllungsregelung, wobei der Füllungsgrad im Arbeitsraum über ein zwischen Arbeitsraum und Vorratsraum angeordnetes Ventil geregelt wird, dadurch gekennzeichnet, dass das Ventil (14, 15, 16) über einen Schrittmotor-Stellantrieb (20) in Abhängigkeit von mindestens einer Regelgrösse angesteuert wird.

2. Verfahren nach Anspruch 1, dadurch gekennzeichnet, dass der Schrittmotor-Stellantrieb (20, 40) über einen Regler (44) angesteuert wird, der die Regelgrösse (x) aufbereitet.

3. Verfahren nach Anspruch 1 oder 2, dadurch gekennzeichnet, dass als Hilfsregelgrösse ($x_h$) in Abhängigkeit von der Regelgrösse (x) die Abtriebsdrehzahl ($n_2$) der Flüssigkeitsreibungskupplung geregelt wird, wobei die Hilfsregelgrösse ($x_h$) ebenfalls dem Regler (44) aufgeschaltet wird.

4. Verfahren nach Anspruch 3, dadurch gekennzeichnet, dass die Abtriebsdrehzahl ($n_2$) auf einen Maximalwert begrenzt wird.

5. Verfahren nach Anspruch 3 oder 4, dadurch gekennzeichnet, dass die Abtriebsdrehzahl ($n_2$) mittels einer sogenannten Hall-Sonde (31, 46) erfasst wird.

6. Verfahren nach einem der Ansprüche 1 bis 5, dadurch gekennzeichnet, dass der Schrittmotor-Stellantrieb (20, 40) eine Linearbewegung (s) erzeugt, die auf das Ventil (15, 16) übertragen wird und somit dessen Hub steuert.

7. Verfahren nach einem der Ansprüche 1 bis 6, dadurch gekennzeichnet, dass die Flüssigkeitsreibungskupplung einen Lüfter zur Förderung eines Kühlluftstromes ($\dot{V}$) antreibt.

8. Verfahren nach Anspruch 7, dadurch gekennzeichnet, dass der Kühlluftstrom ($\dot{V}$) den Kühler (42) einer Brennkraftmaschine, vorzugsweise des Motors eines Kraftfahrzeuges, beaufschlagt, durch den das Kühlmittel des Kühlmittelkreislaufes der Brennkraftmaschine strömt.

9. Verfahren nach Anspruch 8, dadurch gekennzeichnet, dass als Regelgrösse (x) die Temperatur ($\vartheta$) des Kühlmittels dient.

10. Verfahren nach einem der Ansprüche 2 bis 9, dadurch gekennzeichnet, dass dem Regler (44) neben der Regelgrösse (x) und der Hilfsregelgrösse ($x_h$) auch Störgrössen ($z_i$) aufgeschaltet werden.

11. Vorrichtung zur Durchführung des Verfahrens nach einem der Ansprüche 1 bis 10, bestehend aus einer Flüssigkeitsreibungskupplung mit einem Arbeitsraum und einem Vorratsraum, die durch eine Zwischenwand getrennt sind, in der ein Ventil zur Regelung des Füllungsgrades angeordnet ist, das über einen Ventilhebel betätigt wird, dadurch gekennzeichnet, dass mit der Flüssigkeitsreibungskupplung ein koaxial angeordneter Schrittmotor-Stellantrieb (20) verbunden ist, der über ein Betätigungsorgan (26, 27, 28) mit dem Ventilhebel (15) gekoppelt ist.

12. Vorrichtung nach Anspruch 11, wobei die Flüssigkeitsreibungskupplung ein Gehäuse mit einem frontseitigen Deckel aufweist, dadurch gekennzeichnet, dass der Schrittmotor-Stellantrieb (20) in einem im Deckel (4, 5, 23) angeordneten Drehlager (22) und in einem ausserhalb des Dekkels (4, 5) angeordneten ortsfesten Ring (21) gelagert ist.

13. Vorrichtung nach Anspruch 11 oder 12, dadurch gekennzeichnet, dass der Schrittmotor-Stellantrieb (20) eine linear und axial ausfahrbare Spindel (26) aufweist, deren äusseres Ende (27, 28) in Kontakt mit dem Ventilhebel (15, 18) steht.

14. Vorrichtung nach Anspruch 12 oder 13, dadurch gekennzeichnet, dass am Deckel (4, 5, 23) einerseits und am ortsfesten Lager (21) des Schrittmotor-Stellantriebes (20) andererseits ein Drehzahlgeber (29, 30) und ein Drehzahlnehmer (31) einer sogenannten Hall-Sonde befestigt sind.

15. Vorrichtung nach einem der Ansprüche 11 bis 14, wobei die Flüssigkeitsreibungskupplung eine im Arbeitsraum umlaufende, mit einer Antriebswelle verbundene Primärscheibe aufweist, dadurch gekennzeichnet, dass eine im Vorratsraum (9) umlaufende Zusatzscheibe (13) drehfest mit der Antriebswelle (1) verbunden ist.

16. Vorrichtung nach einem der Ansprüche 11 bis 15, dadurch gekennzeichnet, dass der Ventilhebel (15) durch eine Öffnungsfeder (19) belastet ist.

## Revendications

1. Procédé pour commander la vitesse de rotation de sortie d'un accouplement à cisaillement de liquide à régulation du remplissage, dans lequel le degré de remplissage de la chambre de travail est réglé par une soupape interposée entre la chambre de travail et la chambre de réserve, caractérisé en ce que la soupape (14, 15, 16) est pilotée par un actionneur à moteur pas-à-pas (20) en fonction d'eau moins une grandeur réglante.

2. Procédé selon la revendication 1, caractérisé en ce que l'actionneur à moteur pas-à-pas (20, 40) est piloté par un régulateur (44) qui traite la grandeur réglante ($x$).

3. Procédé selon la revendication 1 ou la revendication 2, caractérisé en ce que, en qualité de grandeur réglante auxiliaire ($x_h$), on règle, en fonction de la grandeur réglante ($x$), la vitesse de rotation de sortie ($n_2$) de l'accouplement à cisaillement de liquide, la grandeur réglante auxiliaire ($x_h$) étant elle aussi transmise au régulateur (44).

4. Procédé selon la revendication 3, caractérisé en ce que la vitesse de rotation de sortie ($n_2$) est limitée à une valeur maximale.

5. Procédé selon la revendication 3 ou la revendication 4, caractérisé en ce que la vitesse de rotation de sortie ($n_2$) est captée au moyen de ce qu'on appelle une sonde de Hall (31, 46).

6. Procédé selon l'une des revendications 1 à 5, caractérisé en ce que l'actionneur à moteur pas-à-pas (20, 40) produit un mouvement linéaire qui est transmis à la soupape (15, 16) et qui commande ainsi la levée de cette dernière.

7. Procédé selon l'une des revendications 1 à 6, caractérisé en ce que l'accouplement à cisaillement de liquide entraîne un ventilateur servant à refouler un flux d'air de refroidissement ($\dot{V}$).

8. Procédé selon la revendication 7, caractérisé en ce que le flux d'air de refroidissement ($\dot{V}$) lèche le radiateur (42) d'un moteur à combustion interne, de préférence le moteur d'un véhicule automobile, à travers lequel circule le fluide de refroidissement de circuit de refroidissement du moteur à combustion interne.

9. Procédé selon la revendication 8, caractérisé en ce qu'on utilise comme grandeur réglante ($x$) la température ($\vartheta$) du fluide de refroidissement.

10. Procédé selon l'une des revendications 2 à 9, caractérisé en ce que le régulateur (44) reçoit, en supplément de la grandeur réglante ($x$) et de la grandeur réglante auxiliaire ($x_h$), également des grandeurs perturbatrices ($z_i$).

11. Dispositif pour la mise en œuvre du procédé selon l'une des revendications 1 à 10, constitué par un accouplement à cisaillement de liquide comprenant une chambre de travail et une chambre de réserve qui sont séparées par une cloison dans laquelle est agencée une soupape destinée au réglage du degré de remplissage et qui est actionnée par l'intermédiaire d'un levier de soupape, caractérisé en ce qu'à l'accouplement à cisaillement de liquide est relié un actionneur à moteur pas-à-pas (20) disposé coaxialement et qui est accouplé au levier (15) de la soupape par l'intermédiaire d'un organe d'actionnement (26, 27, 28).

12. Dispositif selon la revendication 11, dans lequel l'accouplement à cisaillement de liquide comprend un carter muni d'un couvercle frontal, caractérisé en ce que l'actionneur à moteur pas-à-pas (20) est tourillonné dans un palier (22) monté lui-même dans le couvercle (4, 5, 23) et monté dans une bague fixe (21) agencée à l'extérieur du couvercle (4, 5).

13. Dispositif selon la revendication 11 ou la revendication 12, caractérisé en ce que l'actionneur à moteur pas-à-pas (20) présente une vis (26) qui peut être mise en extension linéaire et axiale et dont l'extrémité extérieure (27, 28) est en contact avec le levier (15, 18) de la soupape.

14. Dispositif selon la revendication 12 ou la revendication 13, caractérisé en ce qu'un émetteur de vitesse de rotation (29, 30) et un capteur de vitesse de rotation (31) appartenant à un appareil dit sonde de Hall sont fixés, l'un sur le couvercle (4, 5, 23) et l'autre sur le palier fixe (21) de l'actionneur à moteur pas-à-pas (20).

15. Dispositif selon l'une des revendications 11 à 14, dans lequel l'accouplement à cisaillement de liquide présente un disque primaire tournant dans la chambre de travail et relié à un arbre d'entraînement, caractérisé en ce qu'un disque supplémentaire (23), qui tourne dans la chambre de réserve (9), est relié solidairement en rotation à l'arbre d'entraînement (1).

16. Dispositif selon l'une des revendications 11 à 15, caractérisé en ce que le levier (15) de la soupape est chargé par un ressort d'ouverture (19).

**Claims**

1. A method of controlling the output speed of rotation of a fluid friction coupling with regulation in respect of its filling, wherein the degree of filling in the working chamber is regulated by way of a valve disposed between the working chamber and the supply chamber, characterised in that the valve (14, 15, 16) is actuated by way of a stepping motor control drive (20) in dependence on at least one regulating parameter.

2. A method according to claim 1, characterised in that the stepping motor control drive (20, 40) is actuated by way of a regulator (44) which prepares the regulating parameter (x).

3. A method according to claim 1 or claim 2, characterised in that the output speed of rotation ($n_2$) of the fluid friction coupling is regulated, as an auxiliary regulating parameter ($x_h$), in dependence on the regulating parameter (x), wherein the auxiliary regulating parameter ($x_h$) is also supplied to the regulator (44).

4. A method according to claim 3, characterised in that the output speed of rotation ($n_2$) is limited to a maximum value.

5. A method according to claim 3 or claim 4, characterised in that the output speed of rotation ($n_2$) is detected by means of a so-called Hall probe (31, 46).

6. A method according to one of claims 1 to 5, characterised in that the stepping motor control drive (20, 40) produces a linear movement (s) which is transmitted to the valve (15, 16) and thereby controls the stroke movement thereof.

7. A method according to one of claims 1 to 6, characterised in that the fluid friction coupling drives a fan for producing a flow of cooling air ($\dot{V}$).

8. A method according to claim 7, characterised in that the flow of cooling air ($\dot{V}$) acts on the radiator (42) of an internal combustion engine, preferably the engine of a motor vehicle, the coolant of the coolant circuit of the internal combustion engine flowing through the radiator.

9. A method according to claim 8, characterised in that the temperature ($\vartheta$) of the coolant serves as the regulator parameter (x).

10. A method according to one of claims 2 to 9, characterised in that disturbance parameters ($z_1$) are also supplied to the regulator (44), besides the regulating parameter (x) and the auxiliary regulating parameter ($x_h$).

11. Apparatus for carrying out the method according to one of claims 1 to 10, comprising a fluid friction coupling with a working chamber and a supply chamber which are separated by a partitioning wall in which is disposed a valve for regulating the degree of filling, which valve is actuated by way of a valve lever, characterised in that connected to the fluid friction coupling is a coaxially disposed stepping motor control drive (20) which is coupled to the valve lever (15) by way of an actuating member (26, 27, 28).

12. Apparatus according to claim 11 wherein the fluid friction coupling has a housing with a cover on its front side, characterised in that the stepping motor control drive (20) is mounted in a rotary bearing (22) disposed in the cover (4, 5, 23), and in a stationary ring (21) arranged outside the cover (4, 5).

13. Apparatus according to claim 11 or claim 12, characterised in that the stepping motor control drive (20) has a linearly and axially extensible spindle (26) whose outer end (27, 28) is in contact with the valve lever (15, 18).

14. Apparatus according to claim 12 or claim 13, characterised in that a rotary speed transmitter (29, 30) and a rotary speed pickup (31) of a so-called Hall probe are fixed to the cover (4, 5, 23) on the one hand and to the stationary mounting (21) of the stepping motor control drive (20) on the other hand.

15. Apparatus according to one of claims 11 to 14, wherein the fluid friction coupling has a primary disc which rotates in the working chamber and which is connected to a drive shaft characterised in that an additional disc (13) which rotates in the supply chamber (9) is non-rotatably connected to the drive shaft (1).

16. Apparatus according to one of claims 11 to 15, characterised in that the valve lever (15) is loaded by an opening spring (19).

0135827

# Fig. 1

7

# Fig. 2